# EUROPEAN PATENT APPLICATION

(11) **EP 4 428 070 A1**
(43) Date of publication of application: **11.09.2024**
(21) Application number: 23160173.3
(22) Date of filing: 06.03.2023
(51) Int. Cl.: B65G 47/84, B65G 47/96, B07C 3/08

(54) **A SORTING SYSTEM**

(71) Applicant: Eurosort B.V., 1243 HV 's-Graveland (NL)
(72) Inventor: DUIVENVOORDEN, Martinus Fredericus Johannes, 2191 BA De Zilk (NL); DE JONG, Wiebe, 1014 ZL Amsterdam (NL); VAN HAASTER, Patrick Theodorus Johannes, 2191 AS De Zilk (NL); ZWART, Wouter Robert Johan, 2051 JA Overveen (NL)
(74) Representative: De Vries & Metman

(57) **Abstract**

A sorting system (1) comprises a frame (2) which supports an input conveyor (4) including an input supporting surface (8) for supporting articles (A), which input conveyor (4) is drivable with respect to the frame (2) in an input conveying direction (X) and an output conveyor (5) having a plurality of discrete carriers (10) including respective output supporting surfaces (11, 14) for supporting articles (A), which carriers (10) are drivable with respect to the frame (2) in an output conveying direction (Y) and are located behind each other in the output conveying direction (Y). The sorting system (1) comprises a transfer region (6) where the input supporting surface (8) and a part of the carriers (10) extend parallel to each other as seen from above and move synchronously in the same direction under operating conditions. The input conveyor (4) is provided with input displacing members (9) which are located behind each other in the input conveying direction (X) and move synchronously with the input supporting surface (8) in the input conveying direction (X) under operating conditions. The input displacing members (9) are drivable with respect to the frame (2) in transverse direction of the input conveying direction (X). At the transfer region (6) the input displacing members (9) and the output supporting surfaces (11, 14) are aligned with each other. The carriers (10) are provided with respective output displacing members (11, 15) for discharging articles (A) from the output supporting surfaces (11, 14) in transverse direction of the output conveying direction (Y).

## Description

The present invention relates to a sorting system, comprising a frame which supports an input conveyor including an input supporting surface for supporting articles, which input conveyor is drivable with respect to the frame in an input conveying direction and an output conveyor having a plurality of discrete carriers including respective output supporting surfaces for supporting articles, which carriers are drivable with respect to the frame in an output conveying direction and are located behind each other in the output conveying direction, a transfer region where the input supporting surface and a part of the carriers extend parallel to each other as seen from above and move synchronously in the same direction under operating conditions, wherein the input conveyor is provided with input displacing members which are located behind each other in the input conveying direction and move synchronously with the input supporting surface in the input conveying direction (X) under operating conditions, wherein the input displacing members are drivable with respect to the frame in transverse direction of the input conveying direction, wherein at the transfer region the input displacing members and the output supporting surfaces are aligned with each other.

Such a sorting system is known in the prior art. In the known sorting system an article which is supported by the input supporting surface is transported in the input conveying direction and simultaneously moved by one of the input displacing members across the input supporting surface towards a carrier that travels synchronously with that input displacing member at the transfer region. This is possible due to the alignment of the input displacing members and the output supporting surfaces at the transfer region. In fact, the input supporting surface and the output supporting surface of each of the carriers form a common supporting surface which have fixed positions with respect to each other at the transfer region. After leaving the transfer region the output supporting surfaces of the respective carriers of the known sorting system can be selectively tilted at different discharge locations so as to drop articles to be sorted for different destinations.

The present invention aims to provide an improved sorting system.

For this purpose, in the sorting system according to the invention the carriers are provided with respective output displacing members for discharging articles from the output supporting surfaces in transverse direction of the output conveying direction.

An advantage of the sorting system according to the invention is that it provides the opportunity to select one of the lateral sides of the output conveyor for discharging articles, which provides flexibility for locating the sorting system in a certain space. Besides, it provides the opportunity to sort and discharge articles at opposite sides of the output conveyor, hence providing a relatively high sorting capacity. It is noted that the articles can be supplied to the input conveyor synchronously with the conveying speed of the input conveyor and the carriers at the transfer region, for example by means of a supply conveyor, such that at the transfer region each article is located on the input supporting surface in alignment with one of the carriers.

In a preferred embodiment the output supporting surfaces of the carriers are upper surfaces of respective cross-belts which are mounted to carrier frames of the respective carriers, wherein each of the cross-belts is drivable with respect to the corresponding carrier frame in transverse direction of the output conveying direction, thus forming the output displacing member, such that at the transfer region the input displacing members and the upper surfaces of the cross-belts move in the same direction under operating conditions, since in this embodiment the cross-belts assist the input displacing members to transfer the articles to the output conveyor. In other words, each of the cross-belts can pull an article which is displaced by the cooperating input displacing member on its upper surface.

In a particular embodiment each of the cross-belts is drivable with respect to the corresponding carrier frame such that at the transfer region the input displacing members and the upper surfaces of the cross-belts move synchronously under operating conditions. This minimizes friction between articles and the cross-belts during displacement from the input conveyor to the output conveyor.

The input displacing members may comprise respective input pushing elements which are displaceable with respect to the input supporting surface. In this case, the input supporting surface may be displaceable in the input conveying direction only and the input pushing elements can slide articles across the input supporting surface by pushing them.

The input conveyor may comprises an endless slat belt having an upper section and a lower section which extend above each other in a vertical plane, wherein the input supporting surface is formed by an upper surface of the upper section of the slat belt. This is a relatively simple input conveyor. The slats may be elongate and extend in transverse direction of the input conveying direction. The input pushing elements may be movable along the slats. In a well-known manner, displacement of the input pushing elements may be forced by an input guide which is fixed to the frame and extends below the slats, whereas each of the pushing elements may contact the input guide through a link between two neighbouring slats during passing the input guide.

The upper surfaces of the respective cross-belts may be free from obstacles. Such a cross-belt conveyor may be known as a cross-belt sorter. The cross-belts may be endless cross-belts, for example.

Alternatively, each of the cross-belts is provided with at least two barriers, which are located at a distance from each other in transverse direction of the output conveying direction such that upon leaving the transfer region under operating conditions the barriers project upwardly from the cross-belts and the output upper surface of each cross-belt extends between the barriers. This prevents an article from being prematurely discharged from the carrier, for example in a bend of the path that is followed by the carriers. Such a cross-belt conveyor as such may be known as a cross-tray sorter.

In still another alternative embodiment the output supporting surfaces are upper surfaces of respective trays, wherein the output displacing members comprise respective output pushing elements which are movable with respect to the trays in transverse direction of the output conveying direction. Such an output conveyor as such may be known as a push-tray sorter.

The output displacing members may be drivable with respect to the frame in opposite directions. This is advantageous since articles can be sorted and discharged at opposite sides of the output conveyor, hence providing a relatively high sorting capacity.

The transfer region may comprise a linear path.

At the transfer region the input supporting surface and the output supporting surfaces may be flush in order to create a smooth transfer of articles.

The input conveyor may be controllable such that under operating conditions an input displacing member remains in place at the transfer region. This means that the input displacing members are selectively drivable in transverse direction of the input conveying direction. An advantage of this embodiment is that an article which is received by the input conveyor will not be transferred to the output conveyor. This situation may be desired when a carrier which arrives at the transfer region has not discharged an article yet or when it appears that a wrong article, which should not be sorted, is supplied to the input conveyor.

The invention will hereafter be elucidated with reference to the schematic drawings showing an embodiment of the invention by way of example.
Fig. 1 is a plan view of an embodiment of a sorting system according to the invention.
Fig. 2 is an enlarged sectional view along the line II-II in Fig. 1.
Fig. 3 is a similar view as Fig. 2, but showing an alternative embodiment.
Fig. 4 is a similar view as Fig. 2, but showing another alternative embodiment.

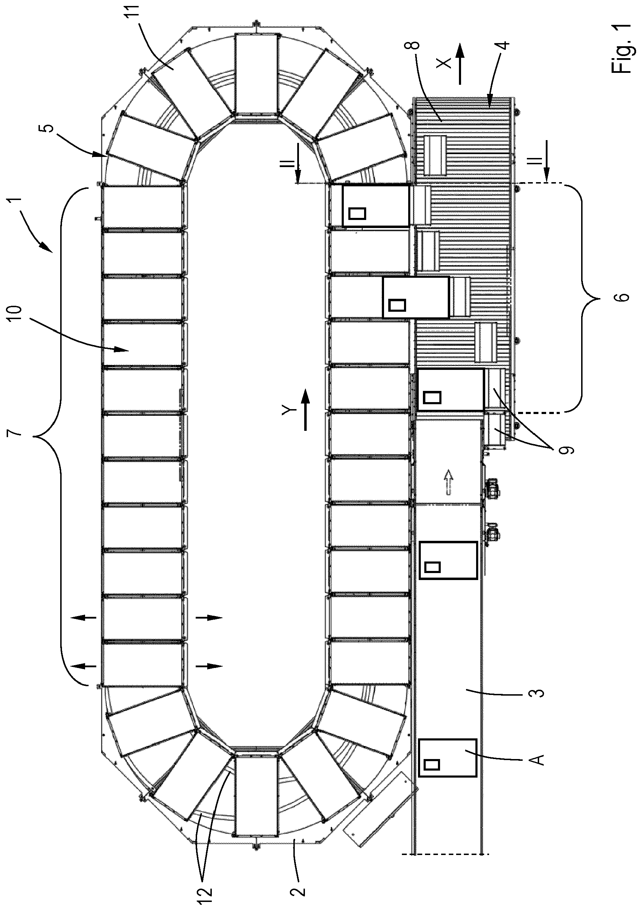

Fig. 1 shows an embodiment of a sorting system 1 according to the invention as seen from above. The sorting system 1 comprises a frame 2 which supports a supply conveyor 3, an input conveyor 4 and an output conveyor 5. Under operating conditions the input conveyor 4 receives articles A to be sorted from the supply conveyor 3. At a transfer region 6 the articles A are transferred from the input conveyor 4 to the output conveyor 5, which in turn transports the articles A to a discharge station 7 where the articles A are selectively discharged from the output conveyor 5 to different receivers (not shown) at lateral sides of the output conveyor 5, corresponding to different destinations.

The input conveyor 4 comprises a drivable endless slat belt 8 including interconnected elongate slats, which are movable with respect to each other. Under operating conditions the slat belt 8 follows a closed loop path in a vertical plane and forms an upper section and a lower section between reversing rollers. A common upper surface of the upper section of the slat belt 8 forms an input supporting surface for supporting and transporting the articles A. The input supporting surface moves in an input conveying direction X under operating conditions, as indicated in Fig. 1.

The input conveyor 4 comprises input displacing members in the form of input pushing elements 9 which travel with the slat belt 8 under operating conditions. The input pushing elements 9 are movable with respect to the slats in longitudinal direction thereof, i.e. in transverse direction of the input conveying direction X. This means that an article A on the slat belt 8 can be slid across the upper surface of the slat belt 8 by one of the input pushing element 9.

The output conveyor 5 is provided with a plurality of interconnected carriers 10 which are supported by the frame 2 and drivable with respect to the frame 2 in an output conveying direction Y. The carriers 10 are located behind each other in the output conveying direction Y and are mounted to each other such that that they can follow a non-linear path. In the embodiment as shown in Fig. 1 the carriers 10 follow a closed loop path within a horizontal plane, but numerous alternative path shapes are conceivable.

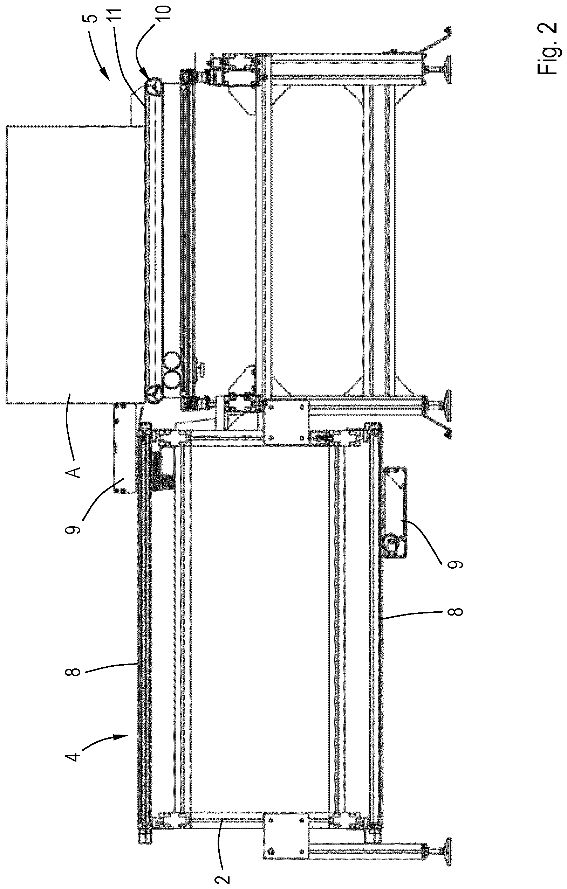

Each of the carriers 10 has an output displacing member in the form of a cross-belt 11 which is drivable with respect to a carrier frame of the carrier 10 in transverse direction of the output conveying direction Y, see Fig. 2. In this case the cross-belts 11 are drivable in opposite directions in order to discharge the articles A from the carriers 10 at both sides of the output conveyor 5 at the discharge station 7 as illustrated by arrows in Fig. 1.

At the transfer region 6 the upper section of the slat belt 8 and a part of the carriers 10 extend parallel to each other as seen from above. The upper section of the slat belt 8 and the cooperating carriers 10 move synchronously in the same direction under operating conditions. This means that their conveying speeds as well as the input conveying direction X and the output conveying direction Y are the same. Furthermore, at the transfer region 6 the cross-belts 11 and the respective input pushing elements 9 are aligned with each other such that each input pushing element 9 can displace an article A from the slat belt 8 towards the cross-belt 11 of a cooperating carrier 10. In other words, under operating conditions at the transfer region 6 pairs of input pushing elements 9 and carriers 10 move synchronously in the same direction whereas at each pair an article A can be displaced by the input pushing element 7 from the slat belt 8 to the cooperating cross-belt 11.

In the embodiment as shown the articles A are supplied by the supply conveyor 3 to the slat belt 8 synchronously with displacement of the slat belt 8 and the carriers 10 such that at the transfer region 6 each article A is located on the slat belt 8 in alignment with one of the carriers 10.

The input conveyor 4 may be provided with an input guide (not shown) which is fixed to the frame 2 and extends below the upper section of the slat belt 8 whereas the input pushing elements 9 are provided with contact elements which pass between adjacent slats of the slat belt 8 and can engage the input guide at the transfer region 6 such that the input guide defines displacements of the input pushing elements 9 along the slats upon moving the upper section of the slat belt 8 in the input conveying direction X. The input pushing elements 9 may be returned to their initial positions by a return guide at the input conveyor 4 when the contact elements 9 of the pushing elements 5 engage the return guide. Such a control system for displacing the input pushing elements 9 as such is known by the skilled person.

The input conveyor 4 may be controllable such that under certain circumstances one of the input pushing elements 9 is not displaced towards a cooperating carrier 10 after receiving an article A from the supply conveyor 3. This means that the article A is only transported in the input conveying direction X by the slat belt 8 and will not be transported by the output conveyor 5. Such a situation may happen when a carrier 10 which arrives at the transfer region 6 is still not empty or when it is detected that an article A which is supplied by the supply conveyor 3 should not be transferred to the output conveyor 5.

The output conveyor 5 is provided with output guides 12 which are fixed to the frame 2 and extend below the carriers 10 whereas the cross-belts 11 are provided with contact elements which can selectively engage the output guides 12 for discharging an article A from the carrier 10 in a well-known manner. At the transfer region 6 the output guides 12 are adapted such that they force the cross-belts 11 to move in the same direction as the input pushing elements 9 during passing the transfer region 6. This means that the articles A are pulled onto the carriers 10 by the cross-belts 11, preferably synchronously with the input pushing elements 9. This minimizes friction between the articles A and the cross-belts 11 on which the articles A are received.

Fig. 2 shows that the level of the upper surface of the cross-belt 11 is slightly lower than the level of the common upper surface of the slat belt 8 at the transfer region 6. It is also possible that the common upper surface of the slat belt 8 and upper surfaces of the cross-belts 11 are flush at the transfer region 6.

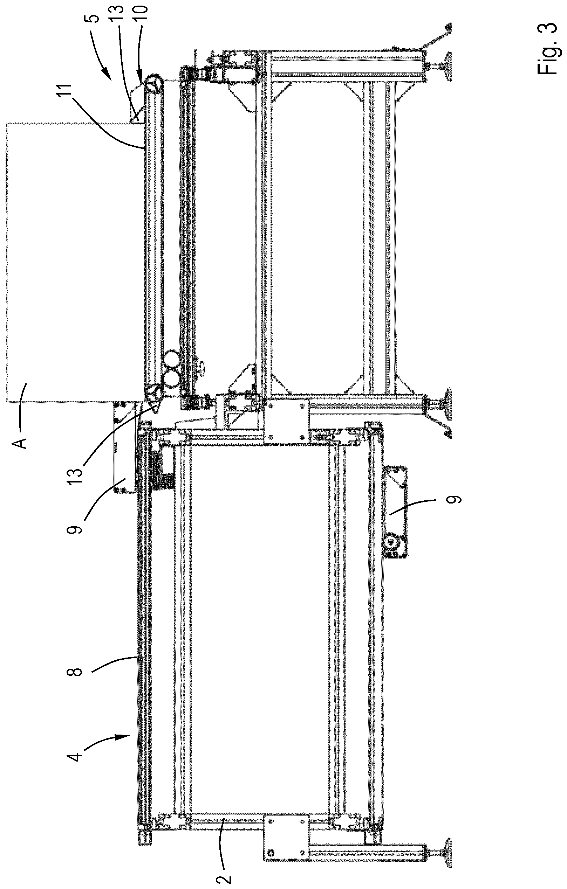

Fig. 3 shows an alternative embodiment, in which the output conveyor 5 is also provided with cross-belts 11, but each of the cross-belts 11 is provided with two barriers 13. The barriers 13 are located at a distance from each other in transverse direction of the output conveying direction Y, as measured along the cross-belt 11. The cross-belts 11 may be adapted and operated such that under operating conditions, when the carriers 10 leave the transfer region 6, both barriers 13 of each cross-belt 11 are directed upwardly such that the output supporting surface of the carrier 10 is formed between the barriers 13, whereas when the carriers 10 arrive at the transfer region 6 one of the barriers 13 is directed downwardly such that an article A which is moving to the output conveyor 5 is not hindered by one of the barriers 13. Fig. 3 shows a situation in which the cross-belt 11 is still moving to the right just before the left one of the barriers 13 also projects upwardly from the cross-belt 11.

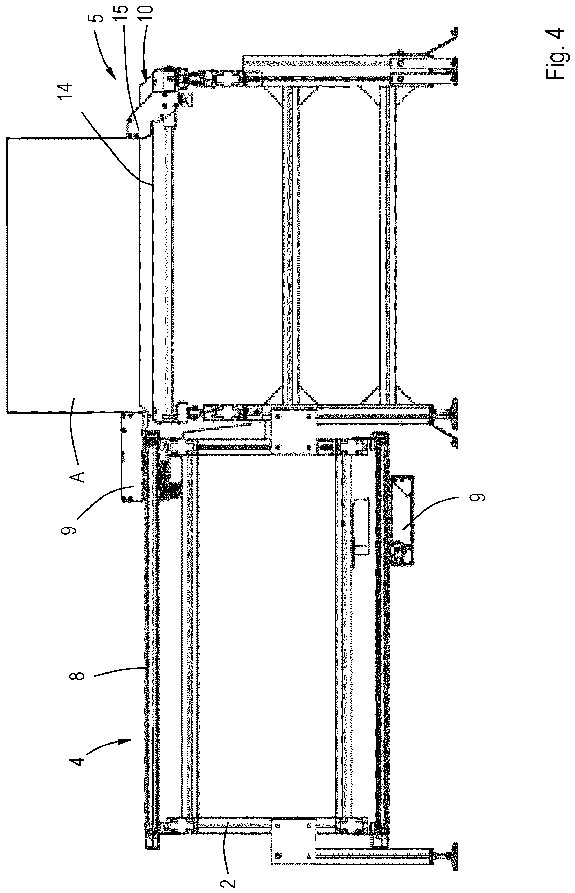

Fig. 4 shows another alternative embodiment, in which the carriers 10 of the output conveyor 5 have respective static trays 14 for receiving articles A and respective output displacing members in the form of output pushing elements 15 which are displaceable above the tray 14. The output pushing elements 15 may comprise respective elongate beams for pushing against articles A which beams extend in the output conveying direction Y in a well-known manner. A lower side of each of the output pushing elements 15 may be provided with a contact element for engaging the output guides 12, similar to the first embodiment as described hereinbefore. At the transfer region 6 the output pushing elements 15 will be positioned at a distance from the input conveyor 4 in order to avoid hindering of an article A which is displaced from the input conveyor 4 to the carrier 10. The embodiment as shown in Fig. 4 is suitable for discharging articles A at one side of the output conveyor 5, but it is also conceivable to apply a static tray and a pushing element for discharging articles at opposite sides of the output conveyor 5, for example a pushing element which is mounted to a drivable cross-belt next to the static tray which allows the pushing element to be located below the tray at the transfer region and discharge an article from the tray in opposite directions.

The invention is not limited to the embodiment shown in the drawings and described hereinbefore, which may be varied in different manners within the scope of the claims and the technical equivalents. For example, the input conveyor may be a different type, such as a shoe sorter, or it may comprise discrete carriers including respective pushing elements.

## Claims

1. A sorting system (1), comprising a frame (2) which supports an input conveyor (4) including an input supporting surface (8) for supporting articles (A), which input conveyor (4) is drivable with respect to the frame (2) in an input conveying direction (X) and an output conveyor (5) having a plurality of discrete carriers (10) including respective output supporting surfaces (11, 14) for supporting articles (A), which carriers (10) are drivable with respect to the frame (2) in an output conveying direction (Y) and are located behind each other in the output conveying direction (Y), a transfer region (6) where the input supporting surface (8) and a part of the carriers (10) extend parallel to each other as seen from above and move synchronously in the same direction under operating conditions, wherein the input conveyor (4) is provided with input displacing members (9) which are located behind each other in the input conveying direction (X) and move synchronously with the input supporting surface (8) in the input conveying direction (X) under operating conditions, wherein the input displacing members (9) are drivable with respect to the frame (2) in transverse direction of the input conveying direction (X), wherein at the transfer region (6) the input displacing members (9) and the output supporting surfaces (11, 14) are aligned with each other **characterized in that** the carriers (10) are provided with respective output displacing members (11, 15) for discharging articles (A) from the output supporting surfaces (11, 14) in transverse direction of the output conveying direction (Y).

2. A sorting system (1) according to claim 1,
wherein the output supporting surfaces of the carriers (10) are upper surfaces of respective cross-belts (11) which are mounted to carrier frames of the respective carriers (10), wherein each of the cross-belts (11) is drivable with respect to the corresponding carrier frame in transverse direction of the output conveying direction (Y), thus forming the output displacing member, such that at the transfer region (6) the input displacing members (9) and the upper surfaces of the cross-belts (11) move in the same direction under operating conditions.

3. A sorting system (1) according to claim 2,
wherein each of the cross-belts (11) is drivable with respect to the corresponding carrier frame such that at the transfer region (6) the input displacing members (9) and the upper surfaces of the cross-belts (11) move synchronously under operating conditions.

4. A sorting system (1) according to claim 2 or 3, wherein the input displacing members comprise respective input pushing elements (9) which are displaceable with respect to the input supporting surface (8).

5. A sorting system (1) according to claim 4,
wherein the input conveyor (4) comprises an endless slat belt (8) having an upper section and a lower section which extend above each other in a vertical plane, wherein the input supporting surface is formed by an upper surface of the upper section of the slat belt (8).

6. A sorting system (1) according to any one of the claims 2-5, wherein the upper surfaces of the respective cross-belts (11) are free from obstacles.

7. A sorting system (1) according to any one of the claims 2-5, wherein each of the cross-belts (11) is provided with at least two barriers (13), which are located at a distance from each other in transverse direction of the output conveying direction (Y) such that upon leaving the transfer region (6) under operating conditions the barriers (13) project upwardly from the cross-belts (11) and the output upper surface of each cross-belt (11) extends between the barriers (13).

8. A sorting system (1) according to claim 1,
wherein the output supporting surfaces are upper surfaces of respective trays (14), wherein the output displacing members comprise respective output pushing elements (15) which are movable with respect to the trays (14) in transverse direction of the output conveying direction (Y).

9. A sorting system (1) according to any one of the preceding claims, wherein the output displacing members (11, 15) are drivable with respect to the frame (2) in opposite directions.

10. A sorting system (1) according to any one of the preceding claims, wherein the transfer region (6) comprises a linear path.

11. A sorting system (1) according to any one of the preceding claims, wherein at the transfer region (6) the input supporting surface (8) and the output supporting surfaces (11, 14) are flush.

12. A sorting system (1) according to any one of the preceding claims, wherein the input conveyor (4) is controllable such that under operating conditions an input displacing member (9) remains in place at the transfer region (6) .
